# EUROPEAN PATENT SPECIFICATION

(11) **EP 3 220 506 B1**
(45) Date of publication and mention of the grant of the patent: **19.02.2020**
(21) Application number: 14905761.4
(22) Date of filing: 11.11.2014
(51) Int. Cl.: H02J 7/00, H01M 10/44, H01M 10/48, H02J 7/04

(54) **COMMUNICATION METHOD, POWER ADAPTOR AND TERMINAL**
KOMMUNIKATIONSVERFAHREN, NETZADAPTER UND ENDGERÄT
PROCÉDÉ DE COMMUNICATION, ADAPTATEUR D'ALIMENTATION ET TERMINAL

(43) Date of publication of application: 20.09.2017
(73) Proprietor: GUANGDONG OPPO MOBILE TELECOMMUNICATIONS CORP., LTD., Wusha, Chang'an Dongguan, Guangdong 523860 (CN)
(72) Inventor: ZHANG, Jialiang, Dongguan Guangdong 523860 (CN)
(74) Representative: Hoffmann Eitle
(86) International application number: PCT/CN2014/090846
(87) International publication number: WO 2016/074159

(56) References cited:
- WO-A1-2014/075498
- CN-A- 102 484 370
- CN-A- 104 065 126
- CN-A- 104 065 147
- CN-A- 104 065 147
- CN-A- 104 092 274
- CN-U- 203 617 746
- US-A1- 2014 300 321
- US-B2- 7 570 014

## Description

### TECHNICAL FIELD

The present disclosure generally relates to the charging technical field, and more particularly, to a communication method, a power adapter and a terminal.

### BACKGROUND

Nowadays, smart phones are favored by more and more consumers. However, the smart phone consumes a lot of electricity, and thus needs to be charged frequently. With the increasing of the battery capacity of the smart phone, the charging time becomes longer. Thus, there is a need to realize a quick charging.

In the related art, in order to realize the quick charging, the tolerance capacity of the smart phone is generally not considered, which directly increases the output current or output voltage of the power adapter, thus resulting in overheating or even burning of the smart phone, and reducing the life time of the smart phone.

In addition to this, from CN 104 065 126 A and CN 104 065 147 A there is known a communication between a power adapter and a terminal while details are taught for the communication and the involved handshake messages and signals. Further, a charging protecting circuit is disclosed.

### SUMMARY

The mentioned problems are solved by the subject-matter of the independent claims. Further preferred embodiments are defined in the dependent claims.

In embodiments of the present disclosure, before the power adapter charges the terminal, the power adapter receives the handshake information from the terminal and determines the initial charging parameter according to the handshake information, such that the phenomenon in which the mobile phone heats or even is burned out caused by blindly increasing voltage or current of the power adapter may be avoided effectively.

### BRIEF DESCRIPTION OF THE DRAWINGS

In order to make technique solutions according to embodiments of the present disclosure more apparent, drawings needed to be used in descriptions of the embodiments will be illustrated in the following. Obviously, the drawings to be illustrated in the following only represent some embodiments of the present disclosure, and other drawings can be obtained according these drawings by those having ordinary skills in the related art without making creative labors.
Fig. 1 is a schematic flow chart of a communication method according to an embodiment of the present disclosure.
Fig. 2 is a schematic flow chart of a communication method according to an embodiment of the present disclosure.
Fig. 3 is a schematic block diagram of a power adapter according to an embodiment of the present disclosure.
Fig.4 is a schematic block diagram of a terminal according to an embodiment of the present disclosure.
Fig. 5 is a schematic block diagram of a power adapter according to an embodiment of the present disclosure.
Fig. 6 is a schematic block diagram of a terminal according to an embodiment of the present disclosure.

### DETAILED DESCRIPTION

The technical solutions in embodiments of the present invention are hereinafter described clearly and completely with reference to accompanying drawings.

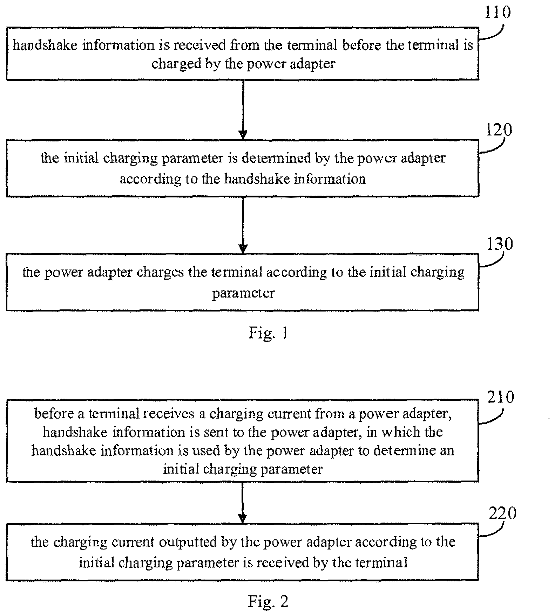

Fig. 1 is a schematic flow chart of a communication method according to an embodiment of the present disclosure. It should be understood that, the communication method may be applied in a specific process of negotiating an initial charging parameter before a terminal is charged by a power adapter. The method shown in Fig. 1 includes following acts.

At block 110, handshake information is received from the terminal before the terminal is charged by the power adapter.

It should be understood that, the terminal may send the handshake information to the power adapter actively or passively. For example, the power adapter first sends a handshake request message to the terminal, and the terminal feeds back a handshake response message carrying the above handshake information to the power adapter after receiving the handshake request message. For another example, the terminal sends a handshake request message carrying the above handshake information to the power adapter actively.

The above handshake information may include at least one of: a model of the terminal, an identification of the terminal; a temperature of a battery in the terminal; a maximum charging voltage supported by the terminal; a maximum charging current supported by the terminal and a charging mode supported by the terminal.

It should be understood that, before the charging, the power adapter may conduct the handshake communication once with the terminal, or conduct the handshake communication for several times with the terminal, until the initial charging parameter is determined.

At block 120, the initial charging parameter is determined by the power adapter according to the handshake information.

It should be understood that, the initial charging parameter herein includes a parameter required by the power adapter for charging the terminal. For example, the initial charging parameter may include at least one of: a charging mode, a charging voltage and a charging current; in which the charging mode includes a quick charging mode and a conventional charging mode.

It should be noted that, in practice, the power adapter and the terminal may negotiate whether to charge under the quick charging mode or the conventional charging mode. Then, the power adapter and the terminal may negotiate the charging voltage or charging current. Alternatively, the power adapter only negotiates the charging mode with the terminal. Alternatively, the power adapter only negotiates the charging voltage or charging current with the terminal.

At block 130, the power adapter charges the terminal according to the initial charging parameter.

In an embodiment of the present disclosure, before the power adapter charges the terminal, the power adapter receives the handshake information from the terminal and determines the initial charging parameter according to the handshake information, such that the phenomenon in which the mobile phone heats or even is burned out caused by blindly increasing voltage or current of the power adapter may be avoided effectively.

Alternatively, as an embodiment, block 110 may include: sending by the power adapter a handshake request message to the terminal; receiving by the power adapter from the terminal a handshake response message including the handshake information. In other words, the power adapter actively sends the handshake request message to the terminal. In practice, regardless of whether the power adapter is coupled to the terminal, the power adapter may send the handshake request message to the outside via a charging interface continually, and perform the subsequent process of negotiating the initial charging parameter after the handshake response message is received from the terminal.

Alternatively, block 110 may include: receiving by the power adapter from the terminal a handshake request message including the handshake information. In other words, the terminal actively sends the handshake request message to the power adapter. In practice, regardless of whether the power adapter is coupled to the terminal, the terminal may send the handshake request message to the outside via a charging interface continually, and execute the subsequent process of negotiating the initial charging parameter after the handshake response message is received from the power adapter.

Alternatively, as an embodiment, block 110 may include: sending by the power adapter a first handshake request message to the terminal; receiving by the power adapter from the terminal a first handshake response message including first information contained in the handshake information, in which the first information indicates that the terminal supports the quick charging mode. Determining by the power adapter the initial charging parameter according to the handshake information includes: determining by the power adapter a charging mode in the initial charging parameter as the quick charging mode according to the first information contained in the handshake information.

In other words, the power adapter and the terminal negotiate whether to charge the terminal under the quick charging mode or the conventional charging mode, through one handshake. It should be understood that, the above first handshake request message may not carry any information, or the first handshake request message may indicate that the power adapter supports the quick charging mode.

Further, block 110 may further include: sending by the power adapter a second handshake request message to the terminal; receiving by the power adapter from the terminal a second handshake response message including second information contained in the handshake information, in which the second information indicates a type or a model of the terminal. Determining by the power adapter the initial charging parameter according to the handshake information further includes: determining by the power adapter a charging voltage and/or a charging current in the initial charging parameter according to the second information.

In other words, after the charging mode is negotiated, the power adapter and the terminal further negotiate the specific charging voltage or charging current. For example, if the model of the power adapter is matched with the model of the terminal, the power adapter may determine the charging voltage or the charging current of the terminal directly after obtaining the model of the terminal.

Alternatively, as an embodiment, block 120 may include: determining by the power adapter a charging parameter to be negotiated according to the handshake information; sending by the power adapter to the terminal a negotiation request message including the charging parameter to be negotiated; receiving by the power adapter from the terminal a negotiation response message which is generated by the terminal based on the charging parameter to be negotiated; determining by the power adapter the initial charging parameter of the terminal according to the negotiation response message.

Specifically, after obtaining the handshake information, the power adapter does not determine the initial charging parameter unilaterally, but first determines the charging parameter to be negotiated and then queries the terminal through the negotiation request message whether the charging parameter to be negotiated is appropriate. If the terminal agrees, the charging parameter to be negotiated is determined as the above initial charging parameter; otherwise, the charging parameter to be negotiated is re-determined or modified according to an indication of the terminal. It should be noted that, the terminal may determine whether the charging parameter to be negotiated is appropriate according to its own working parameter, such as a temperature of a battery, an electricity quantity of the battery, a current working state or other information, which is not limited herein.

It should be noted that, the above negotiation response message may have various forms. Alternatively, as an embodiment, determining by the power adapter the initial charging parameter of the terminal according to the negotiation response message includes: determining by the power adapter the charging parameter to be negotiated as the initial charging parameter if the negotiation response message indicates that the charging parameter to be negotiated is confirmed by the terminal; adjusting by the power adapter the charging parameter to be negotiated based on an adjustment parameter in the negotiation response message and determining the adjusted charging parameter as the initial charging parameter, if the negotiation response message indicates that the charging parameter to be negotiated is denied by the terminal. The adjustment parameter may be a new charging parameter determined by the terminal based on the charging parameter to be negotiated and its own working parameter, or may be some adjustment values and the power adapter is instructed to adjust the charging parameter to be negotiated according to these adjustment values.

By referring to Fig. 1, the communication method according to an embodiment of the present disclosure is described above in detail from the perspective of the power adapter. By referring to Fig. 2, the communication method according to an embodiment of the present disclosure will described below in detail from the perspective of the terminal. It should be understood that, the power adapter and the terminal are two devices interacting with each other in the charging negotiation process, in which interactive information and working process may be the same or corresponding. For the sake of brevity, repeated description may be omitted properly.

Fig. 2 is a schematic flow chart of a communication method according to an embodiment of the present disclosure. It should be understood that, the method in Fig. 2 may include following acts.

At block 210, before a terminal receives a charging current from a power adapter, handshake information is sent from the terminal to the power adapter, in which the handshake information is used by the power adapter to determine an initial charging parameter.

It should be understood that, the above handshake information may include at least one of: a model of the terminal, an identification of the terminal; a temperature of a battery in the terminal; a maximum charging voltage supported by the terminal; a maximum charging current supported by the terminal and a charging mode supported by the terminal.

At block 220, the charging current outputted by the power adapter according to the initial charging parameter is received by the terminal.

The initial charging parameter includes at least one of: a charging mode, a charging voltage and a charging current; in which the charging mode includes a quick charging mode and a conventional charging mode.

In an embodiment of the present disclosure, before the power adapter charges the terminal, the power adapter receives the handshake information from the terminal, and determines the initial charging parameter according to the handshake information, such that the phenomenon in which the mobile phone heats or even is burned out caused by blindly increasing voltage or current of the power adapter may be avoided effectively.

Alternatively, as an embodiment, sending the handshake information to the power adapter includes: receiving by the terminal from the power adapter a handshake request message; sending by the terminal to the power adapter a handshake response message including the handshake information.

Alternatively, as an embodiment, sending the handshake information to the power adapter includes: receiving by the terminal from the power adapter a first handshake request message; sending by the terminal to the power adapter a first handshake response message including first information contained in the handshake information, in which the first information indicates that the terminal supports a quick charging mode.

Alternatively, as an embodiment, sending the handshake information to the power adapter further includes: receiving by the terminal from the power adapter a second handshake request message; sending by the terminal to the power adapter a second handshake response message including second information contained in the handshake information, in which the second information indicates a type or a model of the terminal.

Alternatively, as an embodiment, before the terminal receives the charging current outputted by the power adapter according to the initial charging parameter, the method further includes: receiving by the terminal from the power adapter a charging parameter to be negotiated which is determined by the power adapter based on the handshake information; determining by the terminal according to a working parameter of the terminal whether the terminal may be charged by the power adapter according to the charging parameter to be negotiated provided by the power adapter; if the terminal can be charged by the power adapter according to the charging parameter to be negotiated, sending by the terminal to the power adapter a negotiation response message, in which the negotiation response message instructs the power adapter to determine the charging parameter to be negotiated as the initial charging parameter; if the terminal cannot be charged by the power adapter according to the charging parameter to be negotiated, sending by the terminal to the power adapter a negotiation response message, in which the negotiation response message includes an adjustment parameter and instructs the power adapter to determine the initial charging parameter according to the adjustment parameter.

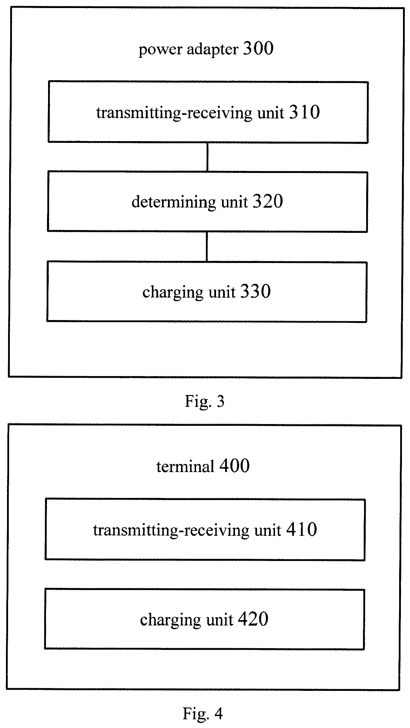

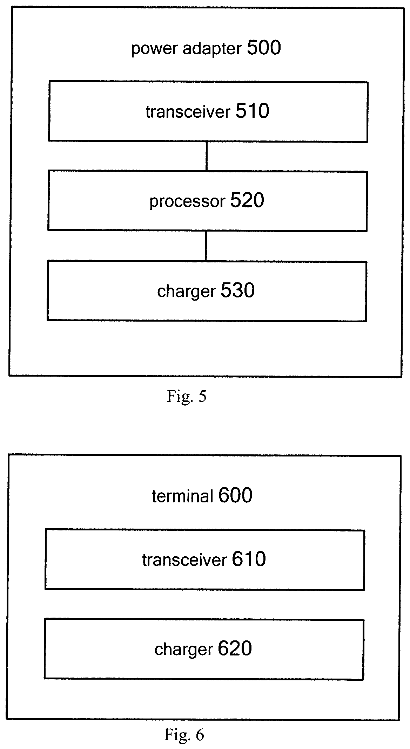

By referring to Fig. 1 and Fig. 2, the communication method according to embodiments of the present disclosure is described in detail above. By referring to Figs. 3 and 6, the power adapter and the terminal according to embodiments of the present disclosure will be described in detail below.

Fig. 3 is a schematic block diagram of a power adapter according to an embodiment of the present disclosure. It should be understood that, the power adapter 300 in Fig. 3 may implement respective acts in Figs. 1 and 2 executed by a power adapter, which is not described herein to avoid repetition. The power adapter 300 in Fig. 3 includes: a transmitting-receiving unit 310, a determining unit 320 and a charging unit 330.

The transmitting-receiving unit 310 is configured to receive handshake information from a terminal before the terminal is charged by the power adapter 300.

The determining unit 320 is configured to determine an initial charging parameter according to the handshake information received by the transmitting-receiving unit 310.

The charging unit 330 is configured to charge the terminal according to the initial charging parameter determined by the determining unit 320.

In an embodiment of the present disclosure, before the power adapter charges the terminal, the power adapter receives the handshake information from the terminal and determines the initial charging parameter according to the handshake information, such that the phenomenon in which the mobile phone heats or even is burned out caused by blindly increasing voltage or current of the power adapter may be avoided effectively.

Alternatively, as an embodiment, the transmitting-receiving unit 310 is specifically configured to send a handshake request message to the terminal, to receive a handshake response message including the handshake information from the terminal.

Alternatively, as an embodiment, the transmitting-receiving unit 310 is specifically configured to send a first handshake request message to the terminal, to receive a first handshake response message including first information contained in the handshake information from the terminal, in which the first information indicates that the terminal supports a quick charging mode. The determining unit 320 is specifically configured to determine a charging mode in the initial charging parameter as the quick charging mode according to the first information contained in the handshake information.

Alternatively, as an embodiment, the transmitting-receiving unit 310 is further configured to send a second handshake request message to the terminal, to receive a second handshake response message including second information contained in the handshake information from the terminal, in which the second information indicates a type or a model of the terminal. The determining unit 320 is further configured to determine a charging voltage and/or a charging current in the initial charging parameter according to the second information.

Alternatively, as an embodiment, the handshake information may include at least one of: a model of the terminal, an identification of the terminal; a temperature of a battery in the terminal; a maximum charging voltage supported by the terminal; a maximum charging current supported by the terminal and a charging mode supported by the terminal.

Alternatively, as an embodiment, the initial charging parameter may include at least one of: a charging mode, a charging voltage and a charging current; in which the charging mode includes a quick charging mode and a conventional charging mode.

Alternatively, as an embodiment, the determining unit 320 is specifically configured to determine a charging parameter to be negotiated according to the handshake information, to send a negotiation request message including the charging parameter to be negotiated to the terminal, to receive from the terminal a negotiation response message generated by the terminal based on the charging parameter to be negotiated, and to determine the initial charging parameter of the terminal according to the negotiation response message.

Alternatively, as an embodiment, the determining unit 320 is specifically configured to determine the charging parameter to be negotiated as the initial charging parameter if the negotiation response message indicates that the charging parameter to be negotiated is confirmed by the terminal, to adjust the charging parameter to be negotiated based on an adjustment parameter in the negotiation response message and determine the adjusted charging parameter as the initial charging parameter if the negotiation response message indicates that the charging parameter to be negotiated is denied by the terminal.

Fig. 4 is a schematic block diagram of a terminal according to an embodiment of the present disclosure. It should be understood that, the terminal 400 in Fig. 4 may implement respective acts in Figs. 1 and 2 executed by a terminal, which is not described herein to avoid repetition. The terminal 400 includes: a transmitting-receiving unit 410, and a charging unit 420.

The transmitting-receiving unit 410 is configured to send handshake information to a power adapter before a charging current is received from the power adapter, in which the handshake information is used by the power adapter to determine an initial charging parameter.

The charging unit 420 is configured to receive the charging current outputted by the power adapter according to the initial charging parameter.

In an embodiment of the present disclosure, before the power adapter charges the terminal, the power adapter receives the handshake information from the terminal and determines the initial charging parameter according to the handshake information, such that the phenomenon in which the mobile phone heats or even is burned out caused by blindly increasing voltage or current of the power adapter may be avoided effectively.

Alternatively, as an embodiment, the transmitting-receiving unit 410 is specifically configured to receive a handshake request message from the power adapter, to send a handshake response message to the power adapter, in which the handshake response message includes the handshake information.

Alternatively, as an embodiment, the transmitting-receiving unit 410 is specifically configured to receive a first handshake request message from the power adapter, to send a first handshake response message including first information contained in the handshake information to the power adapter, in which the first information indicates that the terminal supports a quick charging mode.

Alternatively, as an embodiment, the transmitting-receiving unit 410 is further configured to receive a second handshake request message from the power adapter, to send a second handshake response message including second information contained in the handshake information to the power adapter, in which the second information indicates a type or a model of the terminal.

Alternatively, as an embodiment, the handshake information may include at least one of: a model of the terminal, an identification of the terminal; a temperature of a battery in the terminal; a maximum charging voltage supported by the terminal; a maximum charging current supported by the terminal and a charging mode supported by the terminal.

Alternatively, as an embodiment, the initial charging parameter may include at least one of: a charging mode, a charging voltage and a charging current; in which the charging mode includes a quick charging mode and a conventional charging mode.

Alternatively, as an embodiment, the terminal further includes a negotiating unit. The negotiating unit is configured to: receive a charging parameter to be negotiated from the power adapter, in which the charging parameter to be negotiated is generated by the power adapter based on the handshake information; determine according to a working parameter of the terminal whether the terminal can be charged by the power adapter according to the charging parameter to be negotiated provided by the power adapter; if the terminal can be charged by the power adapter according to the charging parameter to be negotiated, send a negotiation response message to the power adapter, the negotiation response message instructing the power adapter to determine the charging parameter to be negotiated as the initial charging parameter; if the terminal cannot be charged by the power adapter according to the charging parameter to be negotiated, send a negotiation response message to the power adapter, the negotiation response message including an adjustment parameter and instructing the power adapter to determine the initial charging parameter according to the adjustment parameter.

Fig. 5 is a schematic block diagram of a power adapter according to an embodiment of the present disclosure. It should be understood that, the power adapter 500 in Fig. 5 may implement respective acts in Figs. 1 and 2 executed by a power adapter, which is not described herein to avoid repetition. The power adapter 500 in Fig. 5 includes: a transceiver 510, a processor 520 and a charger 530.

The transceiver 510 is configured to receive handshake information from a terminal before the terminal is charged by the power adapter 500.

The processor 520 is configured to determine an initial charging parameter according to the handshake information received by the transceiver 510.

The charger 530 is configured to charge the terminal according to the initial charging parameter determined by the processor 520.

In an embodiment of the present disclosure, before the power adapter charges the terminal, the power adapter receives the handshake information from the terminal and determines the initial charging parameter according to the handshake information, such that the phenomenon in which the mobile phone heats or even is burned out caused by blindly increasing voltage or current of the power adapter may be avoided effectively.

Alternatively, as an embodiment, the transceiver 510 is specifically configured to send a handshake request message to the terminal, to receive a handshake response message including the handshake information from the terminal.

Alternatively, as an embodiment, the transceiver 510 is specifically configured to send a first handshake request message to the terminal, to receive from the terminal a first handshake response message including first information contained in the handshake information, in which the first information indicates that the terminal supports a quick charging mode. The processor 520 is specifically configured to determine a charging mode in the initial charging parameter as the quick charging mode according to the first information contained in the handshake information.

Alternatively, as an embodiment, the transceiver 510 is further configured to send a second handshake request message to the terminal, to receive from the terminal a second handshake response message including second information contained in the handshake information, in which the second information indicates a type or a model of the terminal. The processor 520 is further configured to determine a charging voltage and/or a charging current in the initial charging parameter according to the second information.

Alternatively, as an embodiment, the handshake information may include at least one of: a model of the terminal, an identification of the terminal; a temperature of a battery in the terminal; a maximum charging voltage supported by the terminal; a maximum charging current supported by the terminal and a charging mode supported by the terminal.

Alternatively, as an embodiment, the initial charging parameter may include at least one of: a charging mode, a charging voltage and a charging current; in which the charging mode includes a quick charging mode and a conventional charging mode.

Alternatively, as an embodiment, the processor 520 is specifically configured to determine a charging parameter to be negotiated according to the handshake information, to send a negotiation request message including the charging parameter to be negotiated to the terminal, to receive from the terminal a negotiation response message generated by the terminal based on the charging parameter to be negotiated, and to determine the initial charging parameter of the terminal according to the negotiation response message.

Alternatively, as an embodiment, the processor 520 is specifically configured to determine the charging parameter to be negotiated as the initial charging parameter if the negotiation response message indicates that the charging parameter to be negotiated is confirmed by the terminal, to adjust the charging parameter to be negotiated based on an adjustment parameter in the negotiation response message and determine the adjusted charging parameter as the initial charging parameter if the negotiation response message indicates that the charging parameter to be negotiated is denied by the terminal.

Fig. 6 is a schematic block diagram of a terminal according to an embodiment of the present disclosure. It should be understood that, the terminal 600 in Fig. 6 may implement respective acts in Figs. 1 and 2 executed by a terminal, which is not described herein to avoid repetition. The terminal 600 includes: a transceiver 610, and a charger 620.

The transceiver 610 is configured to send handshake information to a power adapter before a charging current is received from the power adapter, in which the handshake information is used by the power adapter to determine an initial charging parameter.

The charger 620 is configured to receive the charging current outputted by the power adapter according to the initial charging parameter.

In an embodiment of the present disclosure, before the power adapter charges the terminal, the power adapter receives the handshake information from the terminal and determines the initial charging parameter according to the handshake information, such that the phenomenon in which the mobile phone heats or even is burned out caused by blindly increasing voltage or current of the power adapter may be avoided effectively.

Alternatively, as an embodiment, the transceiver 610 is specifically configured to receive a handshake request message from the power adapter, to send a handshake response message to the power adapter, in which the handshake response message includes the handshake information.

Alternatively, as an embodiment, the transceiver 610 is specifically configured to receive a first handshake request message from the power adapter, to send to the power adapter a first handshake response message including first information contained in the handshake information, in which the first information indicates that the terminal supports a quick charging mode.

Alternatively, as an embodiment, the transceiver 610 is further configured to receive a second handshake request message from the power adapter, to send to the power adapter a second handshake response message including second information contained in the handshake information, in which the second information indicates a type or a model of the terminal.

Alternatively, as an embodiment, the handshake information may include at least one of: a model of the terminal, an identification of the terminal; a temperature of a battery in the terminal; a maximum charging voltage supported by the terminal; a maximum charging current supported by the terminal and a charging mode supported by the terminal.

Alternatively, as an embodiment, the initial charging parameter may include at least one of: a charging mode, a charging voltage and a charging current; in which the charging mode includes a quick charging mode and a conventional charging mode.

Alternatively, as an embodiment, the terminal further includes a processor. The processor is configured to: receive a charging parameter to be negotiated from the power adapter, in which the charging parameter to be negotiated is generated by the power adapter based on the handshake information; determine according to a working parameter of the terminal whether the terminal can be charged by the power adapter according to the charging parameter to be negotiated provided by the power adapter; if the terminal can be charged by the power adapter according to the charging parameter to be negotiated, send to the power adapter a negotiation response message instructing the power adapter to determine the charging parameter to be negotiated as the initial charging parameter; if the terminal cannot be charged by the power adapter according to the charging parameter to be negotiated, send to the power adapter a negotiation response message including an adjustment parameter and instructing the power adapter to determine the initial charging parameter according to the adjustment parameter.

It should be understood that, the term "and/or" in this specification describes only an association relationship for describing associated objects and indicates that three relationships may exist. For example, A and/or B may represent the following three cases: only A exists, both A and B exist, and only B exists. In addition, the character "/" in this specification generally indicates an "or" relationship between the associated objects.

It should be understood that, the sequence numbers in the foregoing procedures do not mean the order of the implementation. The implementation order of the procedures is determined according to functions and internal logic of the procedures, and should not impose any limitation on the implementation procedure of the embodiments of the present application.

Those skilled in the art can be aware that, units and algorithm steps in respective examples described with reference to embodiments disclosed in the present disclosure can be realized by electronic hardware or combination of computer software and electronic hardware. Executing these functions in hardware or software depends on particular applications and design constraint conditions of the technical solutions. Technology professionals can use different methods to realize the described functions for each particular application, which should be regarded as being within the scope of the present disclosure.

Those skilled in the art can understand clearly that, for convenience and simplicity of description, specific working process of the above system, devices and units may refer to corresponding process in the above method embodiments, which will not be elaborated herein.

It should be understood that, the system, devices and method disclosed in several embodiments provided by the present disclosure can be realized in any other manner. For example, the device embodiments described above can be merely exemplary, for example, the units are just divided according to logic functions. In practical implementation, the units can be divided in other manners, for example, multiple units or components can be combined or integrated into another system, or some features can be omitted or not executed. In addition, the mutual coupling or direct coupling or communication connection described or discussed can be via some interfaces, and indirect coupling or communication connection between devices or units may be electrical, mechanical or of other forms.

The units illustrated as separate components can be or not be separated physically, and components described as units can be or not be physical units, i.e., can be located at one place, or can be distributed onto multiple network units. It is possible to select some or all of the units according to actual needs, for realizing the objective of embodiments of the present disclosure.

In addition, respective functional units in respective embodiments of the present disclosure can be integrated into one processing unit, or can be present as separate physical entities. It is also possible that two or more than two units are integrated into one unit.

If the functions are realized in form of functional software units and are sold or used as separate products, they can be stored in a computer readable storage medium. Based on this understanding, the parts of the technical solutions or the essential parts of the technical solutions (i.e. the parts making a contribution to the related art) can be embodied in form of software product, which is stored in a storage medium, and includes several instruction used for causing a computer device (for example, a personal computer, a server or a network device) to execute all or part of steps in the methods described in respective embodiments of the present disclosure. The above storage medium may be any medium capable of storing program codes, including a USB flash disk, a mobile hard disk, a Read-Only Memory (ROM), a Random Access Memory (RAM), a disc, or a light disk.

The foregoing description is only directed to preferred embodiments of the present disclosure.

## Claims

1. A communication method comprising before a power adapter (300) charges a terminal (400) :
sending, by the power adapter (300), a first handshake request message to the terminal (400);
receiving, by the power adapter (300), a first handshake response message from the terminal (400), in which the first handshake response message comprises first information indicating that the terminal (400) supports a quick charging mode,
determining, by the power adapter (300), a charging mode in the initial charging parameter as the quick charging mode, according to the first information,
sending, by the power adapter (300), a second handshake request message to the terminal (400);
receiving, by the power adapter (300), a second handshake response message from the terminal (400), in which the second handshake response message comprises second information indicating a type or a model of the terminal (400);
determining, by the power adapter (300), a charging voltage and/or a charging current in the initial charging parameter according to the second information, and
charging, by the power adapter (300), the terminal (400) according to the initial charging parameter in accordance with the determined charging mode and the determined charging voltage and/or a charging current.

2. The method according to claim 1, further comprising:
determining, by the power adapter (300), a charging parameter to be negotiated according to the handshake information;
sending, by the power adapter (300), a negotiation request message to the terminal (400), in which the negotiation request message comprises the charging parameter to be negotiated;
receiving, by the power adapter (300), a negotiation response message from the terminal (400), in which the negotiation response message is generated by the terminal based on the charging parameter to be negotiated;
determining, by the power adapter (300), the initial charging parameter of the terminal according to the negotiation response message;
determining, by the power adapter (300), the charging parameter to be negotiated as the initial charging parameter, if the negotiation response message indicates that the charging parameter to be negotiated is confirmed by the terminal; and
adjusting, by the power adapter (300), the charging parameter to be negotiated based on an adjustment parameter in the negotiation response message and determining, by the power adapter (300), an adjusted charging parameter as the initial charging parameter, if the negotiation response message indicates that the charging parameter to be negotiated is denied by the terminal (400).

3. A communication method, comprising:
receiving, by a terminal (400), a first handshake request message from a power adapter (300);
sending, by the terminal (400), a first handshake response message to the power adapter (300), in which the first handshake response message comprises first information indicating that the terminal (400) supports a quick charging mode,
receiving, by the terminal (400), a second handshake request message from the power adapter; and
sending, by the terminal (400), a second handshake response message to the power adapter, in which the second handshake response message comprises second information in the handshake information, and the second information indicates a type or a model of the terminal (400) .

4. The method according to claim 3, wherein, before receiving, by the terminal (400), the charging current outputted by the power adapter (300) according to the initial charging parameter, further comprising:
receiving, by the terminal (400), a charging parameter to be negotiated from the power adapter, in which the charging parameter to be negotiated is determined by the power adapter (300) based on the handshake information;
determining, by the terminal (400), according to a working parameter of the terminal, whether the terminal can be charged by the power adapter according to the charging parameter to be negotiated provided by the power adapter (300);
if the terminal (400) can be charged by the power adapter (300) according to the charging parameter to be negotiated, sending a negotiation response message to the power adapter (300), in which the negotiation response message instructs the power adapter to determine the charging parameter to be negotiated as the initial charging parameter;
if the terminal (400) cannot be charged by the power adapter (300) according to the charging parameter to be negotiated, sending a negotiation response message to the power adapter (300), in which the negotiation response message comprises an adjustment parameter and instructs the power adapter to determine the initial charging parameter according to the adjustment parameter.

5. A power adapter, comprising:
a transmitting-receiving unit (310), configured to receive handshake information from a terminal (400) before the terminal is charged by the power adapter;
a determining unit (320), configured to determine an initial charging parameter according to the handshake information received by the transmitting-receiving unit (310); and
a charging unit (330), configured to charge the terminal (400) according to the initial charging parameter determined by the determining unit, wherein the transmitting-receiving unit (310) is specifically configured to send a first handshake request message to the terminal (400), and to receive a first handshake response message from the terminal (400), in which the first handshake response message comprises first information in the handshake information, and the first information indicates that the terminal (400) supports a quick charging mode;
the determining unit (320) is specifically configured to determine a charging mode in the initial charging parameter as the quick charging mode, according to the first information in the handshake information, and wherein the transmitting-receiving unit (310) is further configured to send a second handshake request message to the terminal, and to receive a second handshake response message from the terminal (400), in which the second handshake response message comprises second information in the handshake information, and the second information indicates a type or a model of the terminal (400);
the determining unit (320) is further configured to determine a charging voltage and/or a charging current in the initial charging parameter, according to the second information in the handshake information.

6. The power adapter (300) according to claim 5, wherein, the determining unit (320) is specifically configured to:
determine a charging parameter to be negotiated according to the handshake information;
send a negotiation request message to the terminal (400), in which the negotiation request message comprises the charging parameter to be negotiated;
receive a negotiation response message from the terminal (400), in which the negotiation response message is generated by the terminal based on the charging parameter to be negotiated; and
determine the initial charging parameter of the terminal (400) according to the negotiation response message, and
wherein, the determining unit (320) is specifically configured to:
determine the charging parameter to be negotiated as the initial charging parameter, if the negotiation response message indicates that the charging parameter to be negotiated is confirmed by the terminal (400); and
adjust the charging parameter to be negotiated based on an adjustment parameter in the negotiation response message and determine an adjusted charging parameter as the initial charging parameter, if the negotiation response message indicates that the charging parameter to be negotiated is denied by the terminal (400) .

7. A terminal (400), comprising:
a transmitting-receiving unit (410), configured to send handshake information to a power adapter (300) before receiving a charging current from the power adapter, wherein the handshake information is used by the power adapter (300) to determine an initial charging parameter; and
a charging unit (420), configured to receive the charging current outputted by the power adapter according to the initial charging parameter,
wherein the transmitting-receiving unit (410) is specifically configured to:
receive a first handshake request message from the power adapter; and
send a first handshake response message to the power adapter (300), in which the first handshake response message comprises first information in the handshake information, and the first information indicates that the terminal (400) supports a quick charging mode, and
wherein, the transmitting-receiving unit (410) is further configured to:
receive a second handshake request message from the power adapter (300); and
send a second handshake response message to the power adapter (300), in which the second handshake response message comprises second information in the handshake information, and the second information indicates a type or a model of the terminal (400).

8. The terminal (400) according to claim 7, further comprising a negotiating unit, configured to:
receive a charging parameter to be negotiated from the power adapter (300), in which the charging parameter to be negotiated is determined by the power adapter (300) based on the handshake information;
determine according to a working parameter of the terminal (400) whether the terminal can be charged by the power adapter (300) according to the charging parameter to be negotiated provided by the power adapter;
if the terminal can be charged by the power adapter (300) according to the charging parameter to be negotiated, send a negotiation response message to the power adapter (300), in which the negotiation response message instructs the power adapter (300) to determine the charging parameter to be negotiated as the initial charging parameter;
if the terminal (400) cannot be charged by the power adapter (300) according to the charging parameter to be negotiated, send a negotiation response message to the power adapter (300), in which the negotiation response message comprises an adjustment parameter and instructs the power adapter to determine the initial charging parameter according to the adjustment parameter.

9. The communication method according to anyone of claims 1 to 4, or the power adapter according to anyone of claims 5 to 6, or the terminal according to anyone of claims 7 to 8, wherein, the handshake information comprises at least one of: a model of the terminal (400), an identification of the terminal (400), a temperature of a battery in the terminal (400) , a maximum charging voltage supported by the terminal (400), a maximum charging current supported by the terminal (400) and a charging mode supported by the terminal (400), and wherein, the initial charging parameter comprises at least one of: a charging mode, a charging voltage and a charging current, in which the charging mode comprises a quick charging mode and a conventional charging mode.

## Patentansprüche

1. Kommunikationsverfahren, umfassend, bevor ein Netzadapter (300) ein Endgerät (400) lädt:
Senden einer ersten Handshake-Anforderungsnachricht durch den Netzadapter (300) an das Endgerät (400);
Empfangen einer ersten Handshake-Antwortnachricht von dem Endgerät (400) durch den Netzadapter (300), wobei die erste Handshake-Antwortnachricht erste Informationen umfasst, die anzeigen, dass das Endgerät (400) einen Schnelllademodus unterstützt,
Bestimmen eines Lademodus in dem anfänglichen Ladeparameter als den Schnelllademodus entsprechend den ersten Informationen durch den Netzadapter (300),
Senden einer zweiten Handshake-Anforderungsnachricht durch den Netzadapter (300) an das Endgerät (400);
Empfangen einer zweiten Handshake-Antwortnachricht von dem Endgerät (400) durch den Netzadapter (300), wobei die zweite Handshake-Antwortnachricht zweite Informationen umfasst, die einen Typen oder ein Modell des Endgeräts (400) anzeigen;
Bestimmen einer Ladespannung und/oder eines Ladestroms in dem anfänglichen Ladeparameter entsprechend den zweiten Informationen durch den Netzadapter (300), und
Laden des Endgeräts (400) durch den Netzadapter (300) entsprechend dem anfänglichen Ladeparameter in Übereinstimmung mit dem bestimmten Lademodus und der bestimmten Ladespannung und/oder einem Ladestrom.

2. Verfahren nach Anspruch 1, weiter umfassend:
Bestimmen eines auszuhandelnden Ladeparameters entsprechend den Handshake-Informationen durch den Netzadapter (300);
Senden einer Aushandlungsanforderungsnachricht an das Endgerät (400) durch den Netzadapter (300), wobei die Aushandlungsanforderungsnachricht den auszuhandelnden Ladeparameter umfasst;
Empfangen einer Aushandlungsantwortnachricht von dem Endgerät (400) durch den Netzadapter (300), wobei die Aushandlungsantwortnachricht durch das Endgerät, basierend auf dem auszuhandelnden Ladeparameter erzeugt wird;
Bestimmen des anfänglichen Ladeparameters des Endgeräts entsprechend der Aushandlungsantwortnachricht durch den Netzadapter (300);
Bestimmen des auszuhandelnden Ladeparameters als den anfänglichen Ladeparameter durch den Netzadapter (300), wenn die Aushandlungsantwortnachricht anzeigt, dass der auszuhandelnde Ladeparameter durch das Endgerät bestätigt wird; und
Anpassen des auszuhandelnden Ladeparameters durch den Netzadapter (300), basierend auf einem Anpassungsparameter in der Aushandlungsantwortnachricht, und Bestimmen eines angepassten Ladeparameters als den anfänglichen Ladeparameter durch den Netzadapter (300), wenn die Aushandlungsantwortnachricht anzeigt, dass der auszuhandelnde Ladeparameter durch das Endgerät (400) abgelehnt wird.

3. Kommunikationsverfahren, umfassend:
Empfangen durch ein Endgerät (400) einer ersten Handshake-Anforderungsnachricht von einem Netzadapter (300);
Senden einer ersten Handshake-Antwortnachricht an den Netzadapter (300) durch das Endgerät (400), wobei die erste Handshake-Antwortnachricht erste Informationen umfasst, die anzeigen, dass das Endgerät (400) einen Schnelllademodus unterstützt,
Empfangen einer zweiten Handshake-Anforderungsnachricht von dem Netzadapter durch das Endgerät (400); und
Senden einer zweiten Handshake-Antwortnachricht an den Netzadapter durch das Endgerät (400), wobei die zweite Handshake-Antwortnachricht zweite Informationen in den Handshake-Informationen umfasst und die zweiten Informationen einen Typen oder ein Modell des Endgeräts (400) anzeigen.

4. Verfahren nach Anspruch 3, wobei es vor Empfangen des Ladestroms durch das Endgerät (400), der durch den Netzadapter (300) entsprechend dem anfänglichen Ladeparameter ausgegeben wird, weiter umfasst:
Empfangen eines auszuhandelnden Ladeparameters von dem Netzadapter durch das Endgerät (400), wobei der auszuhandelnde Ladeparameter, basierend auf Handshake-Informationen durch den Netzadapter (300) bestimmt wird;
Bestimmen durch das Endgerät (400) entsprechend einem Arbeitsparameter des Endgeräts, ob das Endgerät durch den Netzadapter entsprechend dem durch den Netzadapter (300) bereitgestellten, auszuhandelnden Ladeparameter geladen werden kann;
wenn das Endgerät (400) durch den Netzadapter (300) entsprechend dem auszuhandelnden Ladeparameter geladen werden kann, Senden einer Aushandlungsantwortnachricht an den Netzadapter (300), wobei die Aushandlungsantwortnachricht den Netzadapter anweist, den auszuhandelnden Ladeparameter als den anfänglichen Ladeparameter zu bestimmen;
wenn das Endgerät (400) durch den Netzadapter (300) entsprechend dem auszuhandelnden Ladeparameter nicht aufgeladen werden kann, Senden einer Aushandlungsantwortnachricht an den Netzadapter (300), wobei die Aushandlungsantwortnachricht einen Anpassungsparameter umfasst und den Netzadapter anweist, den anfänglichen Ladeparameter entsprechend dem Anpassungsparameter zu bestimmen.

5. Netzadapter, umfassend:
eine Übertragungs-/Empfangseinheit (310), die konfiguriert ist, um Handshake-Informationen von einem Endgerät (400) zu empfangen, bevor das Endgerät durch den Netzadapter geladen wird;
eine Bestimmungseinheit (320), die konfiguriert ist, um einen anfänglichen Ladeparameter entsprechend den durch die Übertragungs-/Empfangseinheit (310) empfangenen Handshake-Informationen zu bestimmen; und
eine Ladeeinheit (330), die konfiguriert ist, um das Endgerät (400) entsprechend dem von der Bestimmungseinheit bestimmten anfänglichen Ladeparameter zu laden,
wobei die Übertragungs-/Empfangseinheit (310) speziell konfiguriert ist, um eine erste Handshake-Anforderungsnachricht an das Endgerät (400) zu senden und um eine erste Handshake-Antwortnachricht von dem Endgerät (400) zu empfangen, wobei die erste Handshake-Antwortnachricht erste Informationen in den Handshake-Informationen umfasst und die ersten Informationen anzeigen, dass das Endgerät (400) einen Schnelllademodus unterstützt;
die Bestimmungseinheit (320) speziell konfiguriert ist, um einen Lademodus in dem anfänglichen Ladeparameter als den Schnelllademodus entsprechend den ersten Informationen in den Handshake-Informationen zu bestimmen, und wobei die Übertragungs-/Empfangseinheit (310) weiter konfiguriert ist, um eine zweite Handshake-Anforderungsnachricht an das Endgerät zu senden und um eine zweite Handshake-Antwortnachricht von dem Endgerät (400) zu empfangen, wobei die zweite Handshake-Antwortnachricht zweite Informationen in den Handshake-Informationen umfasst und die zweiten Informationen einen Typen oder ein Modell des Endgeräts (400) anzeigen;
die Bestimmungseinheit (320) weiter konfiguriert ist, um eine Ladespannung und/oder einen Ladestrom in dem anfänglichen Ladeparameter entsprechend den zweiten Informationen in den Handshake-Informationen zu bestimmen.

6. Netzadapter (300) nach Anspruch 5, wobei die Bestimmungseinheit (320) speziell konfiguriert ist, um:
einen auszuhandelnden Ladeparameter entsprechend den Handshake-Informationen zu bestimmen;
eine Aushandlungsanforderungsnachricht an das Endgerät (400) zu senden, wobei die Aushandlungsanforderungsnachricht den auszuhandelnden Ladeparameter umfasst;
eine Aushandlungsantwortnachricht von dem Endgerät (400) zu empfangen, wobei die Aushandlungsantwortnachricht durch das Endgerät, basierend auf dem auszuhandelnden Ladeparameter erzeugt wird; und
den anfänglichen Ladeparameter des Endgeräts (400) entsprechend der Aushandlungsantwortnachricht zu bestimmen, und
wobei die Bestimmungseinheit (320) speziell konfiguriert ist, um:
den auszuhandelnden Ladeparameter als den anfänglichen Ladeparameter zu bestimmen, wenn die Aushandlungsantwortnachricht anzeigt, dass der auszuhandelnde Ladeparameter durch das Endgerät (400) bestätigt wird; und
den auszuhandelnden Ladeparameter, basierend auf einem Anpassungsparameter in der Aushandlungsantwortnachricht anzupassen und
einen angepassten Ladeparameter als den anfänglichen Ladeparameter zu bestimmen, wenn die Aushandlungsantwortnachricht anzeigt, dass der auszuhandelnde Ladeparameter durch das Endgerät (400) abgelehnt wird.

7. Endgerät (400), umfassend:
eine Übertragungs-/Empfangseinheit (410), die konfiguriert ist, um Handshake-Informationen an einen Netzadapter (300) zu senden, bevor ein Ladestrom von dem Netzadapter empfangen wird, wobei die Handshake-Informationen von dem Netzadapter (300) verwendet werden, um einen anfänglichen Ladeparameter zu bestimmen; und
eine Ladeeinheit (420), die konfiguriert ist, um den vom Netzadapter ausgegebenen Ladestrom entsprechend dem anfänglichen Ladeparameter zu empfangen,
wobei die Übertragungs-/Empfangseinheit (410) speziell konfiguriert ist, um:
eine erste Handshake-Anforderungsnachricht von dem Netzadapter zu empfangen; und
eine erste Handshake-Antwortnachricht an den Netzadapter (300) zu senden, wobei die erst Handshake-Antwortnachricht erste Informationen in den Handshake-Informationen umfasst und die ersten Informationen anzeigen, dass das Endgerät (400) einen Schnelllademodus unterstützt, und
wobei die Übertragungs-/Empfangseinheit (410) weiter konfiguriert ist, um:
eine zweite Handshake-Anforderungsnachricht von dem Netzadapter (300) zu empfangen; und
eine zweite Handshake-Antwortnachricht an den Netzadapter (300) zu senden, wobei die zweite Handshake-Antwortnachricht zweite Informationen in den Handshake-Informationen umfasst und die zweiten Informationen einen Typen oder ein Modell des Endgeräts (400) anzeigen.

8. Endgerät (400) nach Anspruch 7, das weiter eine Aushandlungseinheit umfasst, die konfiguriert ist um:
von dem Netzadapter (300) einen auszuhandelnden Ladeparameter zu empfangen, wobei der auszuhandelnde Ladeparameter, basierend auf den Handshake-Informationen durch den Netzadapter (300) bestimmt wird;
entsprechend einem Arbeitsparameter des Endgeräts (400) zu bestimmen, ob das Endgerät durch den Netzadapter (300) entsprechend dem durch den Netzadapter bereitgestellten, auszuhandelnden Ladeparameter geladen werden kann;
wenn das Endgerät durch den Netzadapter (300) entsprechend dem auszuhandelnden Ladeparameter geladen werden kann, eine Aushandlungsantwortnachricht an den Netzadapter (300) zu senden, wobei die Aushandlungsantwortnachricht den Netzadapter (300) anweist, den auszuhandelnden Ladeparameter als den anfänglichen Ladeparameter zu bestimmen;
wenn das Endgerät (400) durch den Netzadapter (300) entsprechend dem auszuhandelnden Ladeparameter nicht geladen werden kann, eine Aushandlungsantwortnachricht an den Netzadapter (300) zu senden, wobei die Aushandlungsantwortnachricht einen Anpassungsparameter umfasst und den Netzadapter anweist, den anfänglichen Ladeparameter entsprechend dem Anpassungsparameter zu bestimmen.

9. Kommunikationsverfahren nach einem der Ansprüche 1 bis 4 oder Netzadapter nach einem der Ansprüche 5 bis 6 oder Endgerät nach einem der Ansprüche 7 bis 8, wobei die Handshake-Informationen mindestens eines umfasst von: einem Modell des Endgeräts (400), einer Identifikation des Endgeräts (400), einer Temperatur einer Batterie in dem Endgerät (400), einer maximalen, von dem Endgerät (400) unterstützten Ladespannung, einem maximalen, von dem Endgerät (400) unterstützten Ladestrom und einem von dem Endgerät (400) unterstützten Lademodus, und wobei der anfängliche Ladeparameter mindestens eines umfasst von: einem Lademodus, einer Ladespannung und einem Ladestrom, wobei der Lademodus einen Schnelllademodus und einen herkömmlichen Lademodus umfasst.

## Revendications

1. Procédé de communication comprenant, avant qu'un adaptateur d'alimentation (300) charge un terminal (400) :
un envoi, par l'adaptateur d'alimentation (300), d'un premier message de demande d'établissement de liaison au terminal (400) ;
une réception, par l'adaptateur d'alimentation (300), d'un premier message de réponse d'établissement de liaison du terminal (400), dans lequel le premier message de réponse d'établissement de liaison comprend des premières informations indiquant que le terminal (400) supporte un mode de charge rapide,
une détermination, par l'adaptateur d'alimentation (300), d'un mode de charge dans le paramètre de charge initial comme étant le mode de charge rapide, selon les premières informations,
un envoi, par l'adaptateur d'alimentation (300), d'un second message de un réception, par l'adaptateur d'alimentation (300), d'un second message de réponse d'établissement de liaison du terminal (400), dans lequel le second message de réponse d'établissement de liaison comprend des secondes informations indiquant un type ou un modèle du terminal (400) ;
une détermination, par l'adaptateur d'alimentation (300), d'une tension de charge et/ou d'un courant de charge dans le paramètre de charge initial selon les secondes informations, et
une charge, par l'adaptateur d'alimentation (300), du terminal (400) selon le paramètre de charge initial conformément au mode de charge déterminé et à la tension de charge et/ou du courant de charge déterminés.

2. Procédé selon la revendication 1, comprenant en outre :
une détermination, par l'adaptateur d'alimentation (300), d'un paramètre de charge à négocier selon les informations d'établissement de liaison ;
un envoi, par l'adaptateur d'alimentation (300), d'un message de demande de négociation au terminal (400), dans lequel le message de demande de négociation comprend le paramètre de charge à négocier ;
une réception, par l'adaptateur d'alimentation (300), d'un message de réponse de négociation du terminal (400), dans lequel le message de réponse de négociation est généré par le terminal sur la base du paramètre de charge à négocier ;
une détermination, par l'adaptateur d'alimentation (300), du paramètre de charge initial du terminal selon le message de réponse de négociation ;
une détermination, par l'adaptateur d'alimentation (300), du paramètre de charge à négocier comme étant le paramètre de charge initial, si le message de réponse de négociation indique que le paramètre de charge à négocier est confirmé par le terminal ; et
un réglage, par l'adaptateur d'alimentation (300), du paramètre de charge à négocier sur la base d'un paramètre de réglage dans le message de réponse de négociation et une détermination, par l'adaptateur d'alimentation (300), d'un paramètre de charge réglé comme étant le paramètre de charge initial, si le message de réponse de négociation indique que le paramètre de charge à négocier est refusé par le terminal (400).

3. Procédé de communication, comprenant :
une réception, par un terminal (400), d'un premier message de demande d'établissement de liaison d'un adaptateur d'alimentation (300) ;
un envoi, par le terminal (400), d'un premier message de réponse d'établissement de liaison à l'adaptateur d'alimentation (300), dans lequel le premier message de réponse d'établissement de liaison comprend des premières informations indiquant que le terminal (400) supporte un mode de charge rapide,
un réception, par le terminal (400), d'un second message de demande d'établissement de liaison de l'adaptateur d'alimentation ; et
un envoi, par le terminal (400), d'un second message de réponse d'établissement de liaison à l'adaptateur d'alimentation, dans lequel le second message de réponse d'établissement de liaison comprend des secondes informations dans les informations d'établissement de liaison, et les secondes informations indiquent un type ou un modèle du terminal (400).

4. Procédé selon la revendication 3, dans lequel, avant la réception, par le terminal (400), du courant de charge délivré en sortie par l'adaptateur d'alimentation (300) selon le paramètre de charge initial, le procédé comprend en outre :
une réception, par le terminal (400), d'un paramètre de charge à négocier de l'adaptateur d'alimentation, dans lequel le paramètre de charge à négocier est déterminé par l'adaptateur d'alimentation (300) sur la base des informations d'établissement de liaison ;
une détermination, par le terminal (400), selon un paramètre de travail du terminal, que le terminal peut ou non être chargé par l'adaptateur d'alimentation selon le paramètre de charge à négocier fourni par l'adaptateur d'alimentation (300) ;
si le terminal (400) peut être chargé par l'adaptateur d'alimentation (300) selon le paramètre de charge à négocier, un envoi d'un message de réponse de négociation à l'adaptateur d'alimentation (300), dans lequel le message de réponse de négociation ordonne à l'adaptateur d'alimentation (300) de déterminer le paramètre de charge à négocier comme étant le paramètre de charge initial ;
si le terminal (400) ne peut pas être chargé par l'adaptateur d'alimentation (300) selon le paramètre de charge à négocier, un envoi d'un message de réponse de négociation à l'adaptateur d'alimentation (300), dans lequel le message de réponse de négociation comprend un paramètre de réglage et ordonne à l'adaptateur d'alimentation de déterminer le paramètre de charge initial selon le paramètre de réglage.

5. Adaptateur d'alimentation, comprenant :
une unité d'émission-réception (310), configurée pour recevoir des informations d'établissement de liaison d'un terminal (400) avant que le terminal soit chargé par l'adaptateur d'alimentation ;
une unité de détermination (320), configurée pour déterminer un paramètre de charge initial selon les informations d'établissement de liaison reçues par l'unité d'émission-réception (310) ; et
une unité de charge (330), configurée pour charger le terminal (400) selon le paramètre de charge initial déterminé par l'unité de détermination, dans lequel l'unité d'émission-réception (310) est configurée spécifiquement pour envoyer un premier message de demande d'établissement de liaison au terminal (400), et pour recevoir un premier message de réponse d'établissement de liaison du terminal (400), dans lequel le premier message de réponse d'établissement de liaison comprend des premières informations dans les informations d'établissement de liaison, et les premières informations indiquent que le terminal (400) supporte un mode de charge rapide ;
l'unité de détermination (320) est configurée spécifiquement pour déterminer un mode de charge dans le paramètre de charge initial comme étant le mode de charge rapide, selon les premières informations dans les informations d'établissement de liaison, et dans lequel l'unité d'émission-réception (310) est configurée en outre pour envoyer un second message de demande d'établissement de liaison au terminal, et pour recevoir un second message de réponse d'établissement de liaison du terminal (400), dans lequel le second message de réponse d'établissement de liaison comprend des secondes informations dans les informations d'établissement de liaison, et les secondes informations indiquent un type ou un modèle du terminal (400) ;
l'unité de détermination (320) est configurée en outre pour déterminer une tension de charge et/ou un courant de charge dans le paramètre de charge initial, selon les secondes informations dans les informations d'établissement de liaison.

6. Adaptateur d'alimentation (300) selon la revendication 5, dans lequel l'unité de détermination (320) est configurée spécifiquement pour :
déterminer un paramètre de charge à négocier selon les informations d'établissement de liaison ;
envoyer un message de demande de négociation au terminal (400), dans lequel le message de demande de négociation comprend le paramètre de charge à négocier ;
recevoir un message de réponse de négociation du terminal (400), dans lequel le message de réponse de négociation est généré par le terminal sur la base du paramètre de charge à négocier ; et
déterminer le paramètre de charge initial du terminal (400) selon le message de réponse de négociation, et
dans lequel l'unité de détermination (320) est configurée spécifiquement pour :
déterminer le paramètre de charge à négocier comme étant le paramètre de charge initial, si le message de réponse de négociation indique que le paramètre de charge à négocier est confirmé par le terminal (400) ; et
régler le paramètre de charge à négocier sur la base d'un paramètre de réglage dans le message de réponse de négociation et déterminer un paramètre de charge réglé comme étant le paramètre de charge initial, si le message de réponse de négociation indique que le paramètre de charge à négocier est refusé par le terminal (400).

7. Terminal (400), comprenant :
une unité d'émission-réception (410), configurée pour envoyer des informations d'établissement de liaison à un adaptateur d'alimentation (300) avant de recevoir un courant de charge de l'adaptateur d'alimentation, dans lequel les informations d'établissement de liaison sont utilisées par l'adaptateur d'alimentation (300) pour déterminer un paramètre de charge initial ; et
une unité de charge (420), configurée pour recevoir le courant de charge délivré en sortie par l'adaptateur d'alimentation selon le paramètre de charge initial,
dans lequel l'unité d'émission-réception (410) est configurée spécifiquement pour :
recevoir un premier message de demande d'établissement de liaison de l'adaptateur d'alimentation ; et
envoyer un premier message de réponse d'établissement de liaison à l'adaptateur d'alimentation (300), dans lequel le premier message de réponse d'établissement de liaison comprend des premières informations dans les informations d'établissement de liaison, et les premières informations indiquent que le terminal (400) supporte un mode de charge rapide, et
dans lequel l'unité d'émission-réception (410) est configurée en outre pour :
recevoir un second message de demande d'établissement de liaison de l'adaptateur d'alimentation (300) ; et
envoyer un second message de réponse d'établissement de liaison à l'adaptateur d'alimentation (300), dans lequel le second message de réponse d'établissement de liaison comprend des secondes informations dans les informations d'établissement de liaison, et les secondes informations indiquent un type ou un modèle du terminal (400).

8. Terminal (400) selon la revendication 7, comprenant en outre une unité de négociation, configurée pour :
recevoir un paramètre de charge à négocier de l'adaptateur d'alimentation (300), dans lequel le paramètre de charge à négocier est déterminé par l'adaptateur d'alimentation (300) sur la base des informations d'établissement de liaison ;
déterminer selon un paramètre de travail du terminal (400) si le terminal peut ou non être chargé par l'adaptateur d'alimentation (300) selon le paramètre de charge à négocier fourni par l'adaptateur d'alimentation ;
si le terminal peut être chargé par l'adaptateur d'alimentation (300) selon le paramètre de charge à négocier, envoyer un message de réponse de négociation à l'adaptateur d'alimentation (300), dans lequel le message de réponse de négociation ordonne à l'adaptateur d'alimentation (300) de déterminer le paramètre de charge à négocier comme étant le paramètre de charge initial ;
si le terminal (400) ne peut pas être chargé par l'adaptateur d'alimentation (300) selon le paramètre de charge à négocier, envoyer un message de réponse de négociation à l'adaptateur d'alimentation (300), dans lequel le message de réponse de négociation comprend un paramètre de réglage et ordonne à l'adaptateur d'alimentation de déterminer le paramètre de charge initial selon le paramètre de réglage.

9. Procédé de communication selon l'une quelconque des revendications 1 à 4, ou adaptateur d'alimentation selon l'une quelconque des revendications 5 et 6, ou terminal selon l'une quelconque des revendications 7 et 8, dans lequel les informations d'établissement de liaison comprennent au moins l'un parmi : un modèle du terminal (400), une identification du terminal (400), une température d'une batterie dans le terminal (400), une tension de charge maximale supportée par le terminal (400), un courant de charge maximal supporté par le terminal (400) et un mode de charge supporté par le terminal (400), et dans lequel le paramètre de charge initial comprend au moins l'un parmi : un mode de charge, une tension de charge et un courant de charge, dans lequel le mode de charge comprend un mode de charge rapide et un mode de charge conventionnel.
